# EUROPEAN PATENT SPECIFICATION

(11) **EP 0 626 131 B1**
(45) Date of publication and mention of the grant of the patent: **18.11.1998**
(21) Application number: 94201451.5
(22) Date of filing: 24.05.1994
(51) Int. Cl.: A01K 1/015

(54) **Stable floor for use above a dung pit and/or dung channel; floor plate for forming a stable floor; and stable comprising such floor**
Stallböden zum Gebrauch über einer Dunggrube und/oder eine Dungrinne; Bodenplatte für Stallböden; und Stall mit einem solchen Boden
Plancher d'étable pour utilisateur au-dessus d'une fosse à purin et/ou d'une rigole à purin; plaque de plancher par constituer un plancher d'étable; et étable comprenant un tel plancher

(30) Priority: 24.05.1993 NL 9300883
(43) Date of publication of application: 30.11.1994
(73) Proprietor: BETONINDUSTRIE B.V. CONCRELIT, NL-8331 KG Steenwijk (NL)
(72) Inventor: van der Zee, Tjeerd-Dirk, NL-8605 AA Sneek (NL); Broersma, Jansen, NL-8331 DD Steenwijk (NL); Nichting, Pieter Antonius Maria, NL-3817 TA Amersfoort (NL)
(74) Representative: Smulders, Theodorus A.H.J., Ir.

(56) References cited:
- DE-B- 1 130 645
- FR-A- 1 540 233
- NL-A- 9 000 628
- US-A- 3 859 962

## Description

This invention relates to a stable-floor for livestock, said stable floor comprising a floor portion covering a dung pit and/or a dung channel, said pit and/or channel having spaced substantially parallel supports extending in a longitudinal direction supporting a number of floor plates each bridging the pit and/or channel and together forming said floor portion, said floor portion comprising a plurality of openings for the discharge of slurry and manure into the dung pit and/or dung channel, the openings comprising a plurality of parallel mutually spaced slots extending transversely to said longitudinal direction. The invention also relates to a floor plate for forming such stable-floor.

Such a stable-floor is known from published Dutch patent application 9000628. The known floor, at least the section thereof located above a dung pit and/or dung channel, has concrete floor plates comprising a plurality of parallel slots. The top side of the such grid plates is located in a horizontal plane and the passage of the manure and slurry through the slots is promoted by periodically moving a dung scraper over de stable-floor section formed from such plates.

A drawback of the known floor is that the discharge of slurry and manure is not optimal between the points in time when the dung scraper is active. The manure and the slurry are left on top of the plates, so that ammonia is produced, which may eventually end up in the outside air. Since ammonia is considered one of the causes of acid rain, it is important that the ammonia emission be reduced as much as possible.

The object of the invention is to provide a floor by the use of which the ammonia emission of livestock stables can be reduced. To that end, in accordance with the invention, a stable-floor of the above described type is characterized in that substantially the whole of the top surface of said floor plates comprises at least one sloping surface inclined downwards towards at least one of the slots.

It is observed that US 3 859 962 discloses a feedlot floor having a number of sloping sections discharging into manure removal channels. The floor does not cover a dung pit. Also the slopes are not in the longitudinal direction of the channels but perpendicular thereto.

Hereinafter the invention will be described in detail with reference to the accompanying drawings of an exemplary embodiment.
Fig. 1 diagrammatically shows a top plan view of a part of a stable-floor according to the prior art;
Fig. 2 diagrammatically shows a perspective view of an example of a part of a stable-floor section according to the invention;
Fig. 3 diagrammatically shows a top plan view of an example of a floor plate according to the invention;
Fig. 4 diagrammatically shows a side elevational view of the floor plate of Fig. 3; and
Fig. 5 diagrammatically shows a similar view to Fig. 3 of an example of a stable-floor section built up from plates according to another embodiment of the invention.

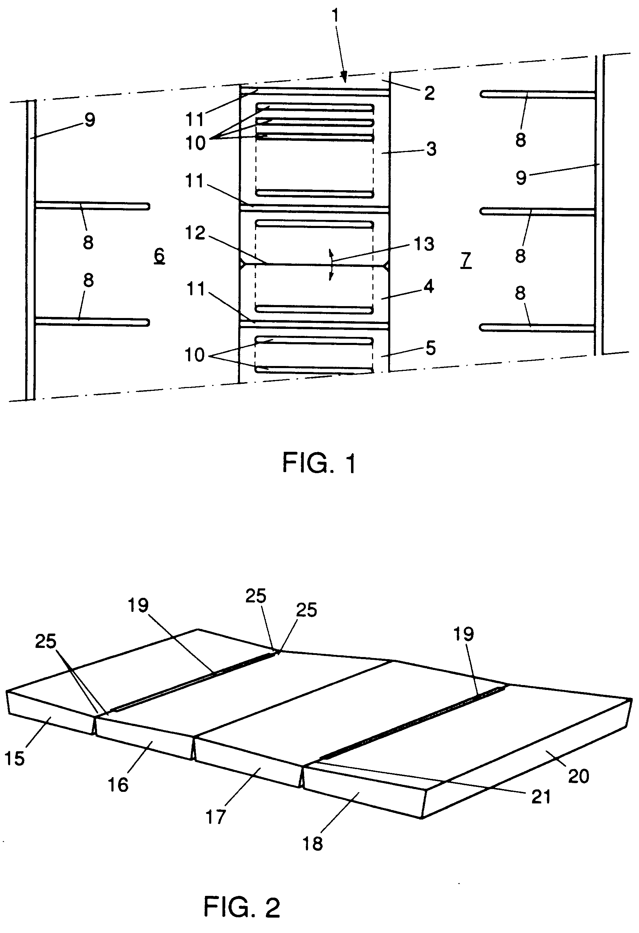

Fig. 1 diagrammatically shows a top plan view of a part of a floor of a known livestock stable, in this example a cowshed. However, the invention is also applicable to stables for other animals, such as pigs. The stable-floor has a central portion 1 comprising grid plates 2-5 of the traditional type. The grid plates cover a dung pit located under the stable-floor. Typically located on opposite sides of the grid floor are floor sections 6, 7 disposed at a slightly higher level and comprising boxes for the individual animals, formed by suitable partitions. The grid plates each comprise a plurality of slots 10 and in the example shown a further slot 11 is formed between pairs of successive grid plates.

The manure and slurry produced by the cattle can be discharged through the slots 10, 11 into the dung pit, which may or may not occur by way of a channel formed under the grid floor by means of a floating floor or the like. Ammonia is released from the excreta produced by the livestock, in particular at the time when manure and urine come into contact with each other.

In order to limit the ammonia emission in the stable as much as possible, oftentimes use is made of dung scrapers periodically sweeping across the grid floor in a direction transverse to the slots. In Fig. 1 such a dung scraper is diagrammatically indicated at 12. If the dung scraper moves over the grid floor in the direction of the arrows 13, the manure and slurry located on the grid floor are pushed towards the slots, so that the manure and the slurry fall into the dung pit or dung channel located under the grid floor. Since the slots are not spaced apart very widely, the scraper need only travel a short path to reach a next slot and cause the manure pushed up by the scraper after it has passed the preceding slot, to fall through the slot.

Since the ammonia emission limits envisaged by the authorities are becoming increasingly more stringent, there is a need for a still more efficient removal, if possible, of manure and slurry from the stable-floor. In this connection, it is of importance that the manure and the slurry be separated as early as possible and to keep them separated as well as possible, at any rate in the stable. An example of the solution to this problem as provided by the invention is shown diagrammatically in Fig. 2.

Fig. 2 diagrammatically shows in perspective four juxtaposed concrete plates 15-18. The plates are intended for use at the position of plates 2-5 shown in Fig. 1. Plates 15-18 each have a thickness increasing from one longitudinal edge to the other longitudinal edge, as can be clearly seen in Fig. 2. Adjacent plates alternately abut each other by their thinner and thicker sides, respectively, with a slot 19 being located on the thinner side. Further, the plates are supported by conventional continuous beams or dung pit walls (not shown), so that the slots are located at the lowest portions of the plates.

Urine excreted onto the plates will therefore flow automatically and directly to the slots, thereby carrying along at least a part of the manure, consisting of more solid elements, lying on the plates. The slope from the thicker edge 20 towards the thinner edge 21 is preferably selected to be such that the conventional dung scrapers, without any adaptations or with only minor adaptations, can also be used with a floor of the type shown in Fig. 2, in spite of the fact that the surface of such a floor is not level but shaped as a washboard.

In a practical situation the plates may, for instance, have a decreasing thickness from about 12 cm to about 10 cm over a distance of about 1 meter. The width of the slots 19 may for instance be 35 mm. The slope is generally of the order of one or a few per cent.

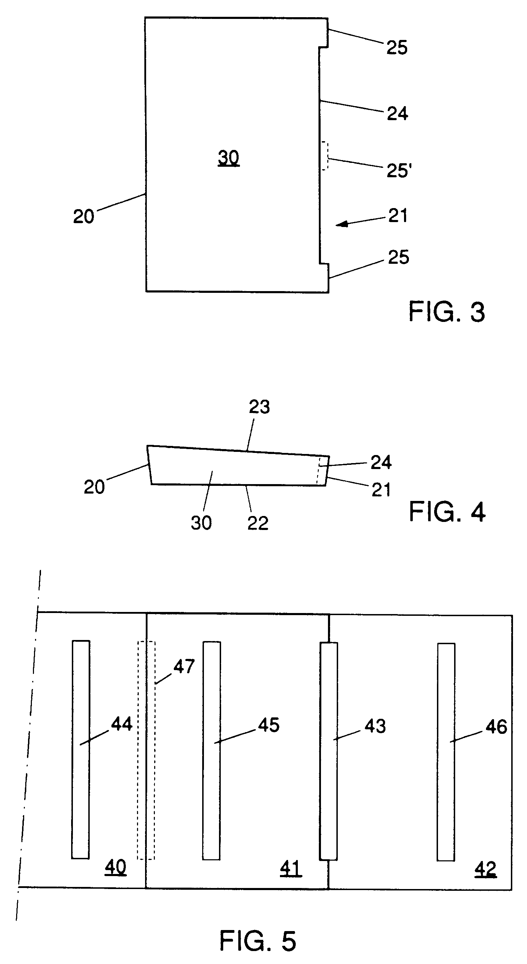

Figs. 3 and 4 diagrammatically show a top plan view and a side elevational view, respectively, of an example of a floor plate 30 according to the invention. In top plan view the plate 30 is substantially rectangular and, as can be seen in Fig. 4, has a thicker and a thinner longitudinal side 21. In the service position the underside 22 of the plates is substantially horizontal, so that the top side 23 exhibits a slope from side 20 to side 21.

In this example, on the side 21 a recess 24 has been formed, extending along the greater part of the length of the longitudinal edge 21. The recess 24 is located between two projections 25 constituting stops which, in the service position, abut against corresponding projections of an adjacent plate, as can be seen in Fig. 2. Thus, in the example shown, each slot 19 is formed by the cooperating recesses 24 on facing thinner sides of two adjacent plates.

If desired, it is, of course, also possible to form the slots by simply arranging the adjacent plates with the facing thinner longitudinal sides spaced apart. In that case, recesses are not needed. If desired, loose spacer pieces can be used to define the slot width.

Conversely, if desired, it is also possible to use one or more additional stops. Thus it would for instance be possible to form a further stop 25' in the centre of the recess 24, as indicated in Fig. 3 by broken lines.

The slots are preferably narrower at their upper ends than at their lower ends, as shown in Fig. 4, so as to prevent stoppage as much as possible. Further, the surfaces on the longitudinal sides 20 and 21 are preferably of receding design, so that they include an obtuse angle with the undersurface 22, yielding a form adapted for easy removal.

The plates are preferably designed with surfaces finished so as to be as smooth as possible to thereby prevent caking as much as possible. Further, if desired, the plates can be impregnated with a moisture-proofing agent, which also promotes the downflow of the manure and slurry. It is also possible for the plates to be provided with a coat of a suitable material. Such a coat could for instance be formed from an epoxy mortar. In that case, if so desired, the coat could also serve to provide the desired slope.

After the foregoing, various modifications will readily occur to those skilled in the art. For instance, the plates could comprise one or more additional slots in the area between the thin side and the thick side. An example of such an embodiment is shown diagrammatically in top plan view in Fig. 5. Fig. 5 shows three plates 40, 41, 42 with a slot 43 formed between the facing thinner sides of the plates 41, 42. In this example each of the plates further comprises an additional slot 44, 45, 46, extending parallel to the slot 43.

Further, if desired, it would also be possible to form a slot on the facing thicker sides of the plates, towards which manure and slurry do not flow automatically, but which can cooperate with a dung scraper. Such a slot is shown in Fig. 5 with broken lines at 47.

If desired, the slots could also be herringbone-shaped. The plates can be rectangular in top plan view but may also have a different shape, for instance a V-shape.

The plates can be designed with parallel top and bottom surfaces and the slope can then be obtained by the use of supporting legs, which may or may not be formed integrally with the plates, or a series of such supporting legs increasing in height or tapering supporting edges. The same effect can be obtained by arranging the plates in sloping orientation using adjustment mortar or by appropriately profiling the upper edges of the dung pit supporting the plates, for instance by designing these upper edges with a serrated profile.

Further, if desired, the plates can be made of a material other than concrete or be provided with a top layer of a material other than concrete or a different kind of concrete. Epoxy mortar has already been mentioned. Other possibly applicable materials are metal, for instance steel, synthetic material, possibly wood, and the like. The plates can also be poured in the work and then finished *in situ*, with or without a separate coat.

Further, it is possible to combine two plates, such as plates 15 and 16 or plates 16 and 17, into a single plate. It would also be possible to combine more than two plates into a single element.

Fig. 3 shows a plate having a receding longitudinal edge bounded at the ends by stops 25 and interrupted in the middle by stop 25'. Accordingly, by the application of such plates, two slotted openings are formed, separated by the stop 25'.

As already indicated above, it is also possible to use several additional stops. In that case, instead of a slot, rows of openings are formed. In this way a stable-floor can be obtained having a very small percentage of open surface. The discharge of manure can then be substantially effected by means of a periodically acting scraper which pushes the manure over the entire length of the dunging floor to the end thereof and discharges it. The slurry is then substantially handled by the openings. In such an embodiment it would be possible, if desired, to provide a further (slight) slope in transverse direction towards the openings to promote a fast discharge of the slurry.

The openings can be small in number, located, for instance, only in the centre of the dunging floor and/or on one or both longitudinal sides of the dunging floor, with an adjusted transverse slope, if used.

In accordance with a further elaboration of the concept of the invention, the openings or the slots may be closable by closing means to be periodically opened, yielding a substantially closed stable-floor.

For this purpose, swiveling metal or plastic flaps can be used, adapted for control by suitable (automatically operating) control means activated by a switching clock.

It would also be possible to place in slotted openings two apertured strips adapted for relative displacement between a position wherein the apertures are in line and a position wherein the apertures are not in line and are closed.

## Claims

1. A stable-floor for livestock, said stable floor comprising a floor portion (1) covering a dung pit and/or a dung channel, said pit and/or channel having spaced substantially parallel supports extending in a longitudinal direction supporting a number of floor plates (15-18;30;40-42) each bridging the pit and/or channel and together forming said floor portion (1), said floor portion (1) comprising a plurality of openings for the discharge of slurry and manure into the dung pit and/or dung channel, the openings comprising a plurality of parallel mutually spaced slots (19;43-47) extending transversely to said longitudinal direction, **characterized in that** substantially the whole of the top surface (23) of each of said floor plates (15-18;30;40-42) comprises at least one sloping surface inclined downwards towards at least one of said slots (19;43-47).

2. A stable-floor according to claim 1, **characterized in that** at least a number of slots (19;43-47) are formed by an interspace between the adjacent edges of two adjacent plates (15-18;30;40-42).

3. A stable-floor according to claim 2, **characterized in that** the interspace between two adjacent plates (15-18;30;40-42) which constitutes a slot (19;43-47) is formed by at least one elongate recess (24) at the longitudinal edge (21) of a plate (15-18;30;40-42) facing the other plate.

4. A stable-floor according to any one of the preceding claims, **characterized in that** the sloping portions are formed by plates (15-18;30;40-42) substantially wedge-shaped in cross section.

5. A stable-floor according to any one of claims 1-3, **characterized in that** the sloping portions are formed by plates (15-18;30;40-42) which, viewed in cross section parallel to the supports have a central portion of a greatest thickness and a thickness decreasing on opposite sides of the central portion towards the edges (21).

6. A stable-floor according to any one of claims 1-3, **characterized in that** the sloping portions are formed by plates (15-18;30;40-42) having parallel top and bottom surfaces, each plate being arranged in a slightly inclined position.

7. A stable-floor according to any one of claims 2-6, **characterized in that** a number of plates (15-18;30;40-42) comprise, in the area between the lower and higher edges of a sloping surface, one or more additional slots (45,46) substantially parallel to said edges.

8. A stable-floor according to any one of the preceding claims, **characterized in that** the slots (19;43-47) are herringboneshaped in top plan view.

9. A stable-floor according to any one of the preceding claims, **characterized in that** a number of discharge slots (47) are formed at the location of the higest portions of the top surface (23) of the syable-floor portion (1).

10. A stable-floor according to any one of claims 6-8, **characterized in that**, for the purpose of obtaining the inclined position, the plates (15-18;30;4042) are arranged on suitable supporting legs or supporting edges.

11. A stable-floor according to any one of claims 6-8, **characterized in that**, for the purpose of obtaining an inclined position, the plates (15-18;30;4042) are placed on suitably profiled upper edges of the walls of a dung pit.

12. A stable-floor according to any one of claims 6-8, **characterized in that** the plates (15-18;30;40-42), for the purpose of obtaining an inclined top surface (23), are provided with a finish layer increasing in thickness.

13. A stable-floor according to any one of the preceding claims, **characterized in that** at least the sloping portions are provided with a very smooth surface finish.

14. A stable-floor according to any one of the preceding claims, **characterized in that** at least the sloping portions have been treated with a moisture-proofing agent.

15. A stable-floor according to any one of the preceding claims, **characterized in that** the slots (19;43-47) are partly closed so as to form a series of openings.

16. A stable-floor according to any one of claims 1-14, **characterized in that** the slots (19;43-47) are at least partly closed while leaving open one or more openings halfway the length of the slot and/or adjacent at least one of the ends thereof.

17. A stable-floor according to claim 16, **characterized by** an additional slope transverse to the sloping portion, in the direction of said openings.

18. A stable-floor according to claim 16 or 17, **characterized by** closing means capable of closing or clearing the openings and coupled with control means.

19. A stable-floor according to claim 15, **characterized in that** the slots are closed by apertured strip-shaped elements.

20. A stable-floor according to claim 19, **characterized in that** the strip-shaped elements comprise two superposed apertured strips adapted for relative displacement between a position wherein the apertures are substantially open and a position wherein the apertures are substantially closed.

21. A floor plate for forming a stable-floor portion (1) as claimed in any one of claims 1-5;7-9;12-20, comprising a top surface, a bottom surface, a first pair of spaced first edges and a second pair of spaced second edges, **characterized in that** the plate (15-18;30;402-42) at least near the first edges, is thicker at one edge of the pair of second edges (20), than at the other edge (21).

22. A floor plate according to claim 21, **characterized in that** the plate comprises at least one open recess (24) at least at said other second edge (21).

23. A floor plate according to claim 21 or 22, **characterized in that** in the area between the two second edges (20,21) at least one slot (45,46) is provided which extends substantially parallel to the second edges (20,21).

24. A floor plate according to any one of claims 21-23, **characterized in that** the plate (15-18;30;40-42) is V-shaped in top plan view.

25. A floor plate according to any one of claims 22-24, **characterized in that** the recess (24) is an elongate recess extending over a considerable part of the corresponding edge (21).

26. A floor plate according to any one of claims 21-25, **characterized in that** the floor plate (15-18;30;40-42) has a smooth finish at least on the top side (23).

27. A floor plate according to any one of claims 21-26, **characterized in that** the floor plate (15-18;30;40-42) comprises a top layer of a different material.

28. A floor plate according to any one of claims 21-27, **characterized in that** at least the top surface (23) has been treated with a moisture-proofing agent.

29. A floor plate according to any one of claims 21-28, **characterized in that** at least the top side (23) of the plate (15-18;30;40-42) is made from other material than concrete.

30. A stable comprising a stable-floor according to any one of claims 1-20.

## Patentansprüche

1. Stallboden für Vieh, wobei dieser Stallboden einen Bodenbereich (1) hat, durch den eine Dunggrube und/oder eine Dungrinne abgedeckt ist, wobei die Grube und/oder Rinne voneinander beabstandete, im wesentlichen parallel verlaufende Abstützungen aufweist, die sich in einer Längsrichtung erstrecken und eine Anzahl von Bodenplatten (15-18; 30; 40-42) abstützen, die jede die Grube und/oder Rinne überbrücken und die zusammen den Bodenbereich (1) bilden, wobei der Bodenbereich (1) eine Anzahl von Öffnungen für das Abführen von Brei und Dung in die Dunggrube und/oder Dungrinne aufweist, wobei die Öffnungen eine Anzahl von parallel verlaufenden, voneinander beabstandeten Schlitzen (19; 43-47) umfassen, die sich schräg zu der Längsrichtung erstrecken, **dadurch gekennzeichnet**, daß im wesentlichen die Gesamtheit der oberen Fläche (23) von jeder der Bodenplatten (15-18; 30; 40-42) zumindest eine abgeschrägte Fläche hat, die nach unten in Richtung auf zumindest einen der Schlitze (19; 43-47) geneigt ist.

2. Stallboden nach Anspruch 1, **dadurch gekennzeichnet**, daß zumindest eine Anzahl von Schlitzen (19; 43-47) durch einen Zwischenraum zwischen den benachbarten Kanten von zwei benachbarten Platten (15-18; 30; 40-42) gebildet ist.

3. Stallboden nach Anspruch 2, **dadurch gekennzeichnet**, daß der Zwischenraum zwischen zwei benachbarten Platten (15-18; 30; 40-42), durch den ein Schlitz (19; 43-47) gebildet ist, durch zumindest eine längliche Vertiefung (24) an der Längskante (21) von einer Platte (15-18; 30; 40-42) gebildet ist, die der anderen Platte zugewandt ist.

4. Stallboden nach einem der vorhergehenden Ansprüche, **dadurch gekennzeichnet**, daß die abgeschrägten Bereiche durch Platten (15-18; 30; 40-42) gebildet sind, die im Querschnitt im wesentlichen keilförmig sind.

5. Stallboden nach einem der Ansprüche 1 bis 3, **dadurch gekennzeichnet**, daß die abgeschrägten Bereiche durch Platten (15-18; 30; 40-42) gebildet sind, die, im Querschnitt gesehen, parallel zu den Abstützungen einen mittleren Bereich mit einer größten Dicke und eine Dicke haben, die an gegenüberliegenden Seiten bezüglich des mittleren Bereiches in Richtung auf die Kanten (21) abnimmt.

6. Stallboden nach einem der Ansprüche 1 bis 3, **dadurch gekennzeichnet**, daß die abgeschrägten Bereiche durch Platten (15-18; 30; 40-42) gebildet sind, die parallel verlaufende obere und untere Flächen haben, wobei jede Platte in einer leicht geneigten Position angeordnet ist.

7. Stallboden nach einem der Ansprüche 2 bis 6, **dadurch gekennzeichnet**, daß eine Anzahl von Platten (15-18; 30; 40-42) in einem Bereich zwischen den niedrigeren und höheren Kanten einer abgeschrägten Fläche einen oder mehrere zusätzliche Schlitze (45, 46) hat, die im wesentlichen parallel zu den Kanten verlaufen.

8. Stallboden nach einem der vorhergehenden Ansprüche, **dadurch gekennzeichnet**, daß die Schlitze (19; 43-47) in der Draufsicht fischgrätenförmig sind.

9. Stallboden nach einem der vorhergehenden Ansprüche, **dadurch gekennzeichnet**, daß eine Anzahl von Abführschlitzen (47) an der Stelle der höchsten Bereiche der oberen Fläche (23) des Stallbodenbereiches (1) gebildet ist.

10. Stallboden nach einem der Ansprüche 6 bis 8, **dadurch gekennzeichnet**, daß die Platten (15-18; 30; 40-42) zum Zwecke des Erhaltens der geneigten Position auf geeigneten Stützbeinen oder Stützkanten angeordnet sind.

11. Stallboden nach einem der Ansprüche 6 bis 8, **dadurch gekennzeichnet**, daß die Platten (15-18; 30; 40-42) zum Zwecke des Erhaltens einer geneigten Position auf geeignet profilierten oberen Kanten der Wände einer Dungrinne angeordnet sind.

12. Stallboden nach einem der Ansprüche 6 bis 8, **dadurch gekennzeichnet**, daß die Platten (15-18; 30; 40-42) zum Zwecke des Erhaltens einer geneigten oberen Fläche (23) mit einer Abdeckschicht versehen sind, durch die die Dicke erhöht wird.

13. Stallboden nach einem der vorhergehenden Ansprüche, **dadurch gekennzeichnet**, daß zumindest die abgeschrägten Bereiche mit einer sehr glatten Oberflächenbeschaffenheit versehen sind.

14. Stallboden nach einem der vorhergehenden Ansprüche, **dadurch gekennzeichnet**, daß zumindest die angeschrägten Bereiche mit einem Flüssigkeiten abweisenden Mittel behandelt sind.

15. Stallboden nach einem der vorhergehenden Ansprüche, **dadurch gekennzeichnet**, daß die Schlitze (19; 43-47) teilweise geschlossen sind, um so eine Reihe von Öffnungen zu bilden.

16. Stallboden nach einem der Ansprüche 1 bis 14, **dadurch gekennzeichnet**, daß die Schlitze (19; 43-47) teilweise geschlossen sind, wobei mittig der Länge des Schlitzes und/oder benachbart zu zumindest einem der Enden davon eine oder mehrere Öffnungen offen gelassen sind.

17. Stallboden nach Anspruch 16, **gekennzeichnet** durch eine zusätzliche Abschrägung schräg zu dem abgeschrägten Bereich und in der Richtung auf die Öffnungen.

18. Stallboden nach Anspruch 16 oder 17, **gekennzeichnet** durch Verschlußeinrichtungen, die in der Lage sind, die Öffnungen zu schließen oder freizugeben, und die mit Steuerungseinrichtungen gekoppelt sind.

19. Stallboden nach Anspruch 15, **dadurch gekennzeichnet**, daß die Schlitze durch mit Aussparungen versehene, streifenförmige Elemente geschlossen sind.

20. Stallboden nach Anspruch 19, **dadurch gekennzeichnet**, daß die streifenförmigen Elemente zwei übereinander angeordnete, mit Aussparungen versehene Streifen enthalten, die für eine relative Verschiebung zwischen einer Position, in der die Aussparungen im wesentlichen offen sind, und einer Position ausgestaltet sind, in der die Aussparungen im wesentlichen geschlossen sind.

21. Bodenplatte zum Bilden eines Stallbodenbereiches (1) nach einem der Ansprüche 1 bis 5; 7 bis 9; 12 bis 20, mit einer oberen Fläche, einer unteren Fläche, einem ersten Paar von beabstandeten ersten Kanten und einem zweiten Paar von beabstandeten zweiten Kanten, **dadurch gekennzeichnet**, daß die Platte (15-18; 30; 40-42) zumindest nahe der ersten Kanten an einer Kante von dem Paar von zweiten Kanten (20) dicker ist als an der anderen Kante (21).

22. Bodenplatte nach Anspruch 21, **dadurch gekennzeichnet**, daß die Platte zumindest eine offene Vertiefung (24) an zumindest der anderen zweiten Kante (21) hat.

23. Bodenplatte nach Anspruch 21 oder 22, **dadurch gekennzeichnet**, daß in dem Gebiet zwischen den beiden zweiten Kanten (20, 21) zumindest ein Schlitz (45, 46) vorgesehen ist, der sich im wesentlichen parallel zu den zweiten Kanten (20, 21) erstreckt.

24. Bodenplatte nach einem der Ansprüche 21 bis 23, **dadurch gekennzeichnet**, daß die Platte (15-18; 30; 40-42) in Draufsicht V-förmig ist.

25. Bodenplatte nach einem der Ansprüche 22 bis 24, **dadurch gekennzeichnet**, daß die Vertiefung (24) eine längliche Vertiefung ist, die sich über einen beträchtlichen Teil der zugehörigen Kante (21) erstreckt.

26. Bodenplatte nach einem der Ansprüche 21 bis 25, **dadurch gekennzeichnet**, daß die Bodenplatte (15-18; 30; 40-42) eine glatte Beschaffenheit zumindest an der oberen Fläche (23) hat.

27. Bodenplatte nach einem der Ansprüche 21 bis 26, **dadurch gekennzeichnet**, daß die Bodenplatte (15-18; 30; 40-42) eine obere Schicht aus einem anderen Material aufweist.

28. Bodenplatte nach einem der Ansprüche 21 bis 27, **dadurch gekennzeichnet**, daß zumindest die obere Fläche (23) mit einem Flüssigkeiten abweisenden Mittel behandelt ist.

29. Bodenplatte nach einem der Ansprüche 21 bis 28, **dadurch gekennzeichnet**, daß zumindest die obere Fläche (23) der Platte (15-18; 30; 40-42) aus einem anderen Material als Beton hergestellt ist.

30. Stall, der einen Stallboden nach einem der Ansprüche 1 bis 20 hat.

## Revendications

1. Plancher d'élevage pour animaux vivants, ledit plancher d'élevage comprenant une partie formant plancher (1) qui couvre une fosse à excréments et/ou un canal à excréments, ladite fosse et/ou ledit canal ayant des supports écartés sensiblement parallèles qui s'étendent dans une direction longitudinale et qui supportent un certain nombre de plaques de plancher (15-18 ; 30 ; 40-42) qui recouvrent chacune la fosse et/ou le canal et qui forment ensemble ladite partie de plancher (1), ladite partie de plancher (1) comprenant une pluralité d'ouvertures pour la décharge de boues et de fumier jusque dans la fosse et/ou le canal à excréments, les ouvertures comprenant une pluralité de fentes écartées et mutuellement parallèles (19 ; 43-47) qui s'étendent transversalement par rapport à ladite direction longitudinale, caractérisé en ce que sensiblement la totalité de la surface supérieure (23) de chacune desdites plaques de plancher (15-18 ; 30 ; 40-42) comprend au moins une surface en pente inclinée vers le bas en direction de l'une au moins desdites fentes (19 ; 43-47).

2. Plancher d'élevage selon la revendication 1, caractérisé en ce qu'au moins un certain nombre de fentes (19 ; 43-47) sont formées par un intervalle entre les bords adjacents de plaques adjacentes (15-18 ; 30 ; 40-42).

3. Plancher d'élevage selon la revendication 2, caractérisé en ce que l'intervalle entre deux plaques adjacentes (15-18 ; 30 ; 40-42) qui constitue une fente (19 ; 43-47) est formé par au moins un évidement allongé (24) à la bordure longitudinale (21) d'une plaque (15-18 ; 30 ; 41-42) qui fait face à l'autre plaque.

4. Plancher d'élevage selon l'une quelconque des revendications précédentes, caractérisé en ce que les parties en pente sont formées par des plaques (15-18 ; 30 ; 40-42) sensiblement en forme de coin en section transversale.

5. Plancher d'élevage selon l'une des revendications 1 à 3, caractérisé en ce que les parties en pente sont formées par des plaques (15-18 ; 30 ; 40-42) qui, vues en section transversale parallèlement aux supports, ont une partie centrale avec une épaisseur importante et une épaisseur qui diminue sur les côtés opposés de la partie centrale en direction des bords (21).

6. Plancher d'élevage selon l'une quelconque des revendications 1 à 3, caractérisé en ce que les parties en pente sont formées par des plaques (15-18 ; 32 ; 40-42) ayant des surfaces supérieure et inférieure parallèles, chaque plaque étant agencée dans une position légèrement inclinée.

7. Plancher d'élevage selon l'une quelconque des revendications 2 à 6, caractérisé en ce qu'un certain nombre de plaques (15-18 ; 30 ; 40-42) comprend, dans la zone entre les bordures supérieure et inférieure d'une surface en pente, une ou plusieurs fentes additionnelles (45, 46) sensiblement parallèles auxdites bordures.

8. Plancher d'élevage selon l'une quelconque des revendications précédentes, caractérisé en ce que les fentes (19 ; 43-47) présentent, vues en plan de dessus, une forme en arêtes de poisson.

9. Plancher d'élevage selon l'une quelconque des revendications précédentes, caractérisé en ce qu'un certain nombre de fentes de décharge (47) sont formées à l'emplacement des parties les plus hautes de la surface supérieure (23) de la partie formant plancher d'élevage (1).

10. Plancher d'élevage selon l'une quelconque des revendications 6 à 8, caractérisé en ce que, dans le but d'obtenir la position inclinée, les plaques (15-18 ; 30 ; 40-42) sont agencées sur des pattes de support ou des bordures de support appropriées.

11. Plancher d'élevage selon l'une quelconque des revendications 6 à 8, caractérisé en ce que, dans le but d'obtenir une position inclinée, les plaques (15-18 ; 30 ; 40-42) sont placées sur des bordures supérieures de profil approprié des parois d'une fosse à excréments.

12. Plancher d'élevage selon l'une quelconque des revendications 6 à 8, caractérisé en ce que les plaques (15-18 ; 30 ; 40-42), dans le but d'obtenir une surface supérieure inclinée (23), sont pourvues d'une couche de finition dont l'épaisseur augmente.

13. Plancher d'élevage selon l'une quelconque des revendications précédentes, caractérisé en ce que les parties en pente au moins sont pourvues d'une surface de finition très lisse.

14. Plancher d'élevage selon l'une quelconque des revendications précédentes, caractérisé en ce que les parties en pente au moins ont été traitées avec un agent anti-humidité.

15. Plancher d'élevage selon l'une quelconque des revendications précédentes, caractérisé en ce que les fentes (19 ; 43-47) sont partiellement fermées de façon à former une série d'ouvertures.

16. Plancher d'élevage selon l'une quelconque des revendications 1 à 14, caractérisé en ce que les fentes (19 ; 43-47) sont au moins partiellement fermées tout en laissant ouvertes une ou plusieurs ouvertures à michemin de la longueur de la fente et/ou en position adjacente à l'une au moins des extrémités de celle-ci.

17. Plancher d'élevage selon la revendication 16, caractérisé par une pente additionnelle transversale à la partie en pente, dans la direction desdites ouvertures.

18. Plancher d'élevage selon l'une ou l'autre des revendications 16 et 17, caractérisé par des moyens de fermeture capables de fermer ou de libérer les ouvertures, et accouplés à des moyens de commande.

19. Plancher d'élevage selon la revendication 15, caractérisé en ce que les fentes sont fermées par des éléments ajourés en forme de bande.

20. Plancher d'élevage selon la revendication 19, caractérisé en ce que les éléments en forme de bande comprennent deux bandes ajourées superposées adaptées à effectuer un déplacement relatif entre une position dans laquelle les ouvertures sont sensiblement ouvertes et une position dans laquelle les ouvertures sont sensiblement fermées.

21. Plaque de plancher destinée à former une partie de plancher d'élevage (1) tel que revendiqué dans l'une quelconque des revendications 1 à 5 ; 7 à 9 ; 12 à 20, comprenant une surface supérieure, une surface inférieure, une première paire de premières bordures écartées et une seconde paire de secondes bordures écartées, caractérisée en ce que la plaque (15-18 ; 30 ; 40-42) est, au moins à proximité des premières bordures, plus épaisse au niveau d'une bordure de la paire des secondes bordures (20) qu'au niveau de l'autre bordure (21).

22. Plaque de plancher selon la revendication 21, caractérisée en ce que la plaque comprend au moins un évidement ouvert (24) au moins au niveau de ladite autre seconde bordure (21).

23. Plaque de plancher selon l'une ou l'autre des revendications 21 et 22, caractérisée en ce que dans la zone entre les deux secondes bordures (20, 21), il est prévu au moins une fente (45, 46) qui s'étend sensiblement parallèlement aux secondes bordures (20, 21).

24. Plaque de plancher selon l'une quelconque des revendications 21 à 23, caractérisée en ce que la plaque (15-18 ; 30 ; 40-42) a en vue en plan de dessus une forme en V.

25. Plaque de plancher selon l'une quelconque des revendications 22 à 24, caractérisée en ce que l'évidement (24) est un évidement allonge qui s'étend sur une partie considérable de la bordure correspondante (21).

26. Plaque de plancher selon l'une quelconque des revendications 21 à 25, caractérisée en ce que la plaque de plancher (15-18 ; 30 ; 40-42) présente une finition lisse au moins sur le côté du dessus (23).

27. Plaque de plancher selon l'une quelconque des revendications 21 à 26, caractérisée en ce que la plaque de plancher (15-18 ; 30 ; 40-42) comprend une couche supérieure en un matériau différent.

28. Plaque de plancher selon l'une quelconque des revendications 21 à 27, caractérisée en ce que la surface supérieure (23) au moins a été traitée avec un agent anti-humidité.

29. Plaque de plancher selon l'une quelconque des revendications 21 à 28, caractérisée en ce que le côté supérieur (23) au moins de la plaque (15-18 ; 30 ; 40-42) est réalisé en un matériau autre que du ciment

30. Ensemble d'élevage comprenant un plancher d'élevage selon l'une quelconque des revendications 1 à 20.
